# EUROPÄISCHE PATENTSCHRIFT

(11) **EP 3 789 318 B1**
(45) Veröffentlichungstag und Bekanntmachung des Hinweises auf die Patenterteilung: **16.08.2023**
(21) Anmeldenummer: 20193668.9
(22) Anmeldetag: 31.08.2020
(51) Int. Cl.: B65D 85/804, B65B 29/02, B29C 43/18

(54) **VERFAHREN ZUR HERSTELLUNG EINER GETRÄNKEKAPSEL MIT DICHTRING**
METHOD FOR PRODUCING A DRINKS CAPSULE WITH SEAL RING
PROCÉDÉ DE FABRICATION D'UNE CAPSULE À BOISSON POURVUE D'ANNEAU D'ÉTANCHÉITÉ

(30) Priorität: 04.09.2019 CH 11112019
(43) Veröffentlichungstag der Anmeldung: 10.03.2021
(73) Patentinhaber: Dätwyler Schweiz AG, 6467 Schattdorf (CH)
(72) Erfinder: Soddemann, Matthias, 6467 Schattdorf (CH); Walker, Sebastian, 6472 Erstfeld (CH)
(74) Vertreter: Prins Intellectual Property AG

(56) Entgegenhaltungen:
- EP-A1- 1 654 966
- WO-A1-2017/106191
- WO-A1-2019/001995
- US-A1- 2011 247 975

## Beschreibung

### Technisches Gebiet

Die Erfindung betrifft ein Verfahren zur Herstellung einer Getränkekapsel mit einem äusseren Dichtring aus elastischem Material.

### Technischer Hintergrund

Getränkekapseln zur Zubereitung eines Getränks aus einem in der Kapsel enthaltenem Getränkesubstrat sind bekannt. Das bekannteste Beispiel ist die Nespresso^{®} Kapsel. Typischerweise bestehen die Getränkekapseln aus einem mit dem Substrat gefüllten festen Kapselkörper, dessen Einfüllöffnung mit einer Folie versiegelt ist. Zur Befestigung der Siegelfolie weist der Kapselkörper einen umlaufenden flanschähnlichen Rand auf. Damit die Getränkekapsel dichtend in der Getränkezubereitungsmaschine gehalten werden kann, ist der umlaufende flanschähnlichen Rand an der der Siegelfolie gegenüberliegenden Seite mit einem Dichtungsmittel versehen.

Solche Dichtungsmittel gibt es in einer Vielzahl von Ausführungen und sie sind entweder im flanschähnlichen Rand eingeformt (z.B. Rillen und Rippen) oder als separates Dichtelement am flanschähnlichen Rand angebracht.

Die als separates Dichtelement angebrachten Dichtungsmittel bestehen typischerweise aus einem ringförmigen elastischen Material.

Aus EP2151313 und EP2381199 sind jeweils ein Verfahren zur Aufbringung eines gummielastischen Dichtelements auf den flanschähnlichen Rand bekannt, bei welchem eine nicht ausgehärtete Dichtzusammensetzung in einem flüssigen oder zähen Zustand auf den Rand aufgebracht wird. Anschliessend die Dichtzusammensetzung erhitzt und ausgehärtet. Das Verfahren liefert zwar Kapseln mit guten Dichtungen, die Herstellung der Kapseln ist insgesamt aber sehr zeitaufwendig. WO19001995 beschreibt ebenfalls eine Kapsel, bei der das Dichtelement in viskoser oder flüssiger Form aufgebracht wird. Aus WO19081363A1 ist ein ähnliches Verfahren bekannt, bei welchem ein Thermoplast im flüssigen Zustand aufgebracht wird. All diese Verfahren sind aufwendig und benötigen speziell dazu entwickelte Vorrichtungen zur Auftragung der Dichtung in flüssiger Form.

EP1654966 und EP1839543 beschreiben jeweils eine Kapsel mit einem Dichtelement aus gummi-elastischem Material. Das Dichtelement wird mittels Kleben, Schweissen oder Verpressen am flanschähnlichen Rand befestigt.

EP1849715, EP2012994 und EP2279845 beschreiben jeweils ein Verfahren zur Befestigung eines Dichtelements an einer Kapsel aus Aluminium, bei welchem das Dichtelement beim Umbiegen des äussersten Teils des flanschähnlichen Randes befestigt wird.

EP2070828 beschreibt eine Kapsel mit Dichtring, der nach der Abfüllung und Versiegelung der Portionspackung am Behältnis befestigt wird, so dass er nicht den bei Abfüllung und Versiegelung der Portionspackung auftretenden hohen Temperaturen ausgesetzt ist.

Aus DE202009009125U1 ist eine Kapsel bekannt, bei welcher der Benutzer je nach Bedarf einen Dichtring selbst anbringt.

Getränkekapseln werden in enorm grossen Mengen hergestellt. Daher führt jede Zeitersparnis bei der Herstellung - seien es auch nur wenige Sekunden pro Kapsel -zu grossen Kostenersparnissen.

### Darstellung der Erfindung

Eine Aufgabe der Erfindung ist es, ein Verfahren zur Herstellung einer Getränkekapsel anzugeben, die gute Dichtungseigenschaften aufweist und dennoch kostengünstig herstellbar ist.

Diese Aufgabe wird durch ein Verfahren mit den Merkmalen des Anspruch 1 gelöst. Das Verfahren zur Herstellung einer Getränkekapsel mit einem äusseren Dichtring aus elastischem Material umfasst die Schritte: (a) Bereitstellen eines Kapselkörpers mit einem umlaufenden flanschähnlichen Rand zur Befestigung einer Siegelfolie; (b) Bereitstellen eines an den flanschartigen Rand angepassten Dichtrings aus elastischem Material; (c) Platzieren des Dichtrings und des Kapselkörpers in einer Kapselhalterung einer Versiegelungseinrichtung zur Versiegelung der Kapsel mit der Siegelfolie, wobei der Dichtring zwischen der Kapselhalterung und dem flanschähnlichen Rand des Kapselkörpers angeordnet ist; (d) Befüllen des Kapselkörpers mit einem Getränkesubstrat; und (e) Versiegeln des Kapselkörpers mit der Siegelfolie und gleichzeitiges Befestigen des Dichtrings am flanschähnlichen Rand.

In dem während dem Versiegelungsschritt gleichzeitig der Dichtring an der Unterseite (d.h. die der Siegelfolie abgewandten Seite Seite) des flanschähnlichen Randes befestigt wird, kann die Herstellungszeit für eine Getränkekapsel erheblich verkürzt werden.

In einigen Ausführungsformen kann der Dichtring aus einem Material ausgewählt aus der Gruppe umfassend Elastomer, Thermoplast, thermoplastisches Elastomer (TPE) (z.B. thermoplastische Polyamidelastomere (TPA), thermoplastische Copolyesterelastomere (TPC), thermoplastische Elastomere auf Olefinbasis (TPO), Thermoplastische Elastomere auf Urethanbasis (TPU) oder Thermoplastische Vulkanisate oder vernetzte thermoplastische Elastomere auf Olefinbasis (TPV)).

Besonders geeignet ist thermoplastisches Polyurethan. Dies hat insbesondere den Vorteil, dass der Dichtring ohne weitere Vorbehandlung während dem thermischen Versiegelungsprozess direkt am flanschähnlichen Rand befestigbar ist.

Der Dichtring kann vorzugsweise aus einer Folie gestanzt oder geschnitten sein. Die Folie kann eine Dicke von 25 bis 1000 Mikrometer, vorzugsweise etwa 500 Mikrometer, aufweisen.

In einigen Ausführungsformen kann der Dichtring einen inneren Durchmesser aufweisen, der geringer ist als ein äusserer Durchmesser einer Kapselwand im Bereich des flanschähnlichen Randes, so dass der nach dem Versiegelungsschritt befestigte Dichtring teilweise an der Kapselwand anliegt.

In einigen Ausführungsformen kann der Dichtring, welcher im festen Zustand platziert wird, während dem Versiegelungsschritt plastisch verformt werden. Dazu kann eine Oberfläche des oberen Randes der Kapselhalterung mit einer Profilierung versehen sein, um einen profilierten Dichtring zu erhalten.

In einigen Ausführungsformen ist die Kapselhalterung für den Kapselkörper derart ausgestaltet, dass im Bereich des flanschähnlichen Randes des Kapselkörpers zwischen einer konischen Kapselwand des Kapselkörpers und einer Innenwand der Kapselhalterung ein Spalt vorhanden ist, so dass ein Teil des Materials des Dichtrings während dem Versiegeln des Kapselkörpers entlang der Kapselwand fliessen kann.

Alternativ aber nicht gemäss der Erfindung kann der Dichtring vor dem Versiegeln der Getränkekapsel befestigt werden. Das Verfahren zur Herstellung einer Getränkekapsel mit einem äusseren Dichtring aus elastischem Material umfasst dann die Schritte: (a) Bereitstellen eines Kapselkörpers mit einem umlaufenden flanschähnlichen Rand zur Befestigung einer Siegelfolie; (b) Bereitstellen eines an den flanschartigen Rand angepassten Dichtrings aus elastischem Material; und (c) Platzieren des Dichtrings und des Kapselkörpers in einer Kapselhalterung zur Befestigung des Dichtrings am flanschähnlichen Rand des Kapselkörpers, wobei der Dichtring zwischen der Kapselhalterung und dem flanschähnlichen Rand des Kapselkörpers angeordnet ist; und (d) Befestigung des Dichtrings mittels thermischer Verpressung mit einem Gegendruckelement.

In einigen Ausführungsformen kann der Dichtring während der Verpressung plastisch verformt werden.

In einigen Ausführungsformen kann eine Stirnseite der Kapselhalterung eine Profilierung aufweisen, welche während dem Versiegelungsschritt auf den Dichtring übertragen wird.

In einigen Ausführungsformen kann die Kapselhalterung für den Kapselkörper derart ausgestaltet sein, dass im Bereich des flanschähnlichen Randes des Kapselkörpers zwischen einer konischen Kapselwand des Kapselkörpers und einer Innenwand der Kapselhalterung ein Spalt vorhanden ist, so dass ein Teil des Materials des Dichtrings während dem Verpressen des Kapselkörpers entlang der Kapselwand fliessen kann.

Dieses alternative Herstellungsverfahren einer Getränkekapsel mit Dichtring kann als eigenständige Erfindung betrachtet werden. Dabei kann ein Dichtring in die gewünschte Form gebracht werden, ohne dass aufwendige Apparaturen zum Aufbringen eines flüssigen Materials notwendig sind.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine Explosionsdarstellung einer Getränkekapsel;
- Fig. 2: eine Schnittdarstellung der Getränkekapsel aus Fig. 1 mit Versiegelungsvorrichtung;
- Fig. 3: unter (a) bis (d) einzelne Schritte des Herstellungsverfahrens der Getränkekapsel; und
- Fig. 4: eine Detaildarstellung des am Kapselkörper befestigen Dichtrings.

### Wege zur Ausführung der Erfindung

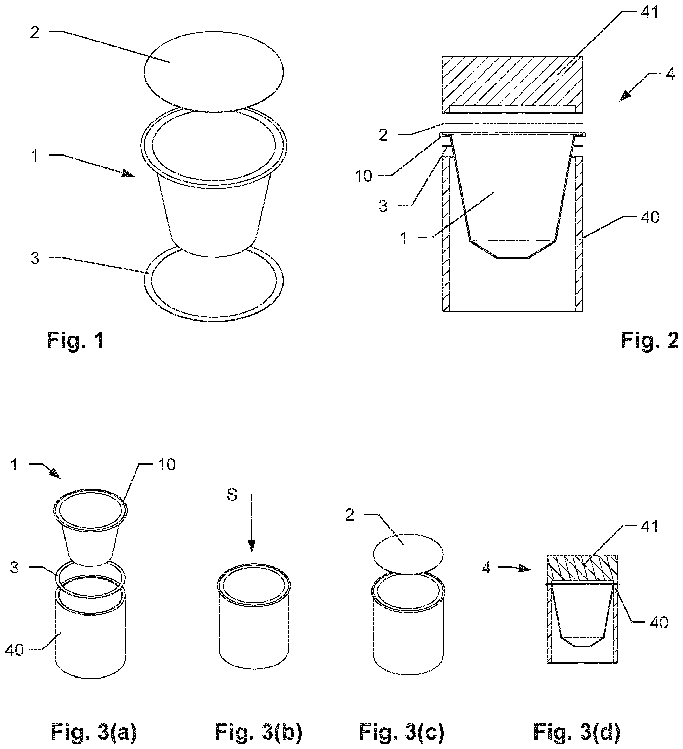

Fig. 1 zeigt in einer Explosionsdarstellung eine Nespresso^{®}-kompatible Getränkekapsel umfassend einen Kapselkörper 1 mit einem umlaufenden flanschähnlichen Rand 10, eine Siegelfolie 2 und einen Dichtring 3. Im fertigen Zustand ist der Kapselkörper 1 mit Getränkesubstrat (nicht dargestellt) gefüllt und mit der Siegelfolie 2 versiegelt, welche dazu am flanschähnlichen Rand 10 befestigt wird. Der Dichtring 3 wird ebenfalls am flanschähnlichen Rand 10, und zwar an der der Siegelfolie 3 gegenüberliegenden Seite befestigt.

Fig. 2 zeigt ebenfalls in einer Explosionsdarstellung die Getränkekapsel mit den obigen drei Elementen und eine schematisch dargestellte Versiegelungseinrichtung 4 mit Kapselhalterung 40 und Siegelkopf 41.

Fig. 3 zeigt unter (a) bis (d) Schritte eines Verfahrens zur Herstellung einer versiegelten Getränkekapsel mit einem äusseren Dichtring 3 aus elastischem Material.

In einem ersten Schritt werden Kapselkörper 1 und Dichtring 3 bereitgestellt und anschliessend in der Kapselhalterung 40 der Versiegelungseinrichtung 4 platziert, so dass der Dichtring 3 zwischen einem oberen Rand resp. einer Stirnseite der Kapselhalterung 40 und der Unterseite des flanschähnlichen Randes 10 zu liegen kommt.

Anschliessend wir Getränkesubstrat S (Pfeil) in den Kapselkörper 1 eingefüllt. Im nächsten Schritt wird die Siegelfolie 2 bereitgestellt und in der Versiegelungseinrichtung 4 mittels eines Siegelkopfs 41 auf die Oberseite des flanschähnlichen Randes 10 des Kapselkörpers 1 geschweisst. Gleichzeitig wird durch die Verpressung und/oder durch die thermische Einwirkung der Versiegelungseinrichtung 4 der Dichtring 3 an der Unterseite des flanschähnlichen Randes 10 befestigt.

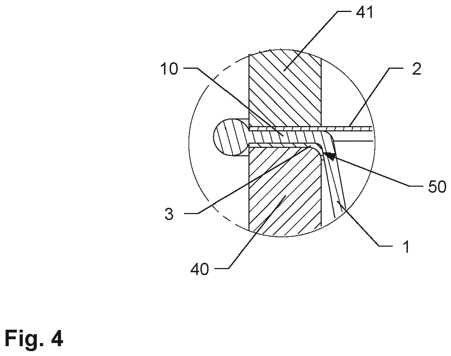

Fig. 4 zeigt eine Detaildarstellung der Getränkekapsel in der Versiegelungseinrichtung. In der gezeigt Ausführung ist die Kapselhalterung 40 für den Kapselkörper 1 derart ausgestaltet, dass im Bereich des flanschähnlichen Randes 10 des Kapselkörpers 1 zwischen einer konischen Kapselwand 11 des Kapselkörpers 1 und einer Innenwand der Kapselhalterung 40 ein Spalt 50 vorhanden ist, so dass während dem Versiegelungsschritt ein Teil des Materials des Dichtrings 3 entlang der Kapselwand 11 gepresst wird. Für eine gute Zentrierung und Fixierung des Kapselkörpers in der Kapselhalterung 40 kann diese unterhalb des Spaltes 50 eine konische Innenwand aufweisen, an welcher der Kapselkörper anliegt.

### Bezeichnungsliste

- 1: Kapselkörper
- 2: Siegelfolie
- 3: Dichtelement
- 4: Versiegelungseinrichtung
- 10: flanschähnlicher Rand
- 11: konische Kapselwand
- 40: Kapselhalterung
- 41: Siegelkopf
- 50: Spalt

## Patentansprüche

1. Verfahren zur Herstellung einer Getränkekapsel mit einem äusseren Dichtring (3) aus elastischem Material umfassend die Schritte:
a. Bereitstellen eines Kapselkörpers (1) mit einem umlaufenden flanschähnlichen Rand (10) zur Befestigung einer Siegelfolie (2);
b. Bereitstellen eines an den flanschartigen Rand (10) angepassten Dichtrings (3) aus elastischem Material;
c. Platzieren des Dichtrings (3) und des Kapselkörpers (1) in einer Kapselhalterung (40) einer Versiegelungseinrichtung (4) zur Versiegelung des Kapselkörpers (1) mit der Siegelfolie (2), wobei der Dichtring (3) zwischen der Kapselhalterung (4) und dem flanschähnlichen Rand (10) des Kapselkörpers (1) angeordnet ist;
d. Befüllen des Kapselkörpers (1) mit einem Getränkesubstrat; und
e. Versiegeln des Kapselkörpers (1) mit der Siegelfolie (2) und gleichzeitiges Befestigen des Dichtrings (3) am flanschähnlichen Rand (10) mittels der Versiegelungseinrichtung (4).

2. Verfahren nach Anspruch 1, **dadurch gekennzeichnet, dass** der Dichtring aus einem Elastomer, Thermoplast oder thermoplastischem Elastomer (TPE), vorzugsweise thermoplastisches Polyurethan (TPU), gefertigt ist.

3. Verfahren nach einem der vorangehenden Ansprüche, **dadurch gekennzeichnet, dass** der Dichtring (3) aus einer Folie gestanzt oder geschnitten ist.

4. Verfahren nach einem der vorangehenden Ansprüche, **dadurch gekennzeichnet, dass** der Dichtring (3) einen inneren Durchmesser aufweist, der geringer ist als ein äusserer Durchmesser einer Kapselwand im Bereich des flanschähnlichen Randes, so dass der nach dem Versiegelungsschritt befestigte Dichtring teilweise an der Kapselwand anliegt.

5. Verfahren nach einem der vorangehenden Ansprüche, **dadurch gekennzeichnet, dass** der Kapselkörper (1) aus Aluminium gefertigt ist.

6. Verfahren nach einem der vorangehenden Ansprüche, **dadurch gekennzeichnet, dass** der Dichtring (3) während dem Versiegelungsschritt plastisch verformt.

7. Verfahren nach Anspruch 6, **dadurch gekennzeichnet, dass** eine Stirnseite der Kapselhalterung (40) eine Profilierung aufweist, welche während dem Versiegelungsschritt auf den Dichtring (3) übertragen wird.

8. Verfahren nach einem der vorangehenden Ansprüche, **dadurch gekennzeichnet, dass** die Kapselhalterung (40) für den Kapselkörper (1) derart ausgestaltet, dass im Bereich des flanschähnlichen Randes (10) des Kapselkörpers (1) zwischen einer konischen Kapselwand (11) des Kapselkörpers (1) und einer Innenwand der Kapselhalterung (40) ein Spalt (50) vorhanden ist, so dass ein Teil des Materials des Dichtrings (3) während dem Versiegeln des Kapselkörpers entlang der Kapselwand (11) fliessen kann.

## Claims

1. A method for manufacturing a beverage capsule with an outer gasket ring (3) made of an elastic material, comprising the following steps:
a. Providing a capsule body (1) with a continuous flange-like edge (10) for fastening a sealing film (2) ;
b. Providing a gasket ring (3) made of an elastic material that is adjusted to the flange-like edge (10) ;
c. Placing the gasket ring (3) and the capsule body (1) in a capsule holder (40) of a sealing device (4) for sealing the capsule body (1) with the sealing film (2), wherein the gasket ring (3) is arranged between the capsule holder (40) and the flange-like edge (10) of the capsule body (1);
d. Filling the capsule body (1) with a beverage substrate; and
e. Sealing the capsule body (1) with the sealing film (2) and simultaneously fastening the sealing ring (3) to the flange-like edge (10) by means of the sealing device (4).

2. The method according to claim 1, **characterized in that** the sealing ring is fabricated out of an elastomer, thermoplastic or thermoplastic elastomer (TPE), preferably thermoplastic polyurethane (TPU).

3. The method according to one of the preceding claims, **characterized in that** the sealing ring (3) is punched or cut out of a film.

4. The method according to one of the preceding claims, **characterized in that** the sealing ring (3) has an inner diameter that is smaller than an outer diameter of a capsule wall in the area of the flange-like edge, so that the gasket ring fastened after the sealing step partially abuts against the capsule wall.

5. The method according to one of the preceding claims, **characterized in that** the capsule body (1) is fabricated out of aluminum.

6. The method according to one of the preceding claims, **characterized in that** the gasket ring (3) plastically deforms during the sealing step.

7. The method according to claim 6, **characterized in that** a front side of the capsule holder (40) has a profiling that is transferred to the gasket ring (3) during the sealing step.

8. The method according to one of the preceding claims, **characterized in that** the capsule holder (40) for the capsule body (1) is designed in such a way that a gap (50) is present in the area of the flange-like edge (10) of the capsule body (1) between a conical capsule wall (11) of the capsule body (1) and an inner wall of the capsule holder (40), so that part of the material of the gasket ring (3) can flow along the capsule wall (11) while sealing the capsule body.

## Revendications

1. Procédé de fabrication d'une capsule de boisson avec une bague d'étanchéité extérieure (3) constituée d'un matériau élastique, comportant les étapes suivantes :
a. mise à disposition d'un corps de capsule (1) avec un bord périphérique semblable à une bride (10) pour la fixation d'un film d'étanchéité (2) ;
b. mise à disposition d'une bague d'étanchéité (3) constituée d'un matériau élastique, adaptée au bord du genre bride (10) ;
c. placement de la bague d'étanchéité (3) et du corps de capsule (1) dans un support de capsule (40) d'un dispositif de scellage (4) pour le scellage du corps de capsule (1) avec le film d'étanchéité (2), la bague d'étanchéité (3) étant disposée entre le support de capsule (40) et le bord du genre bride (10) du corps de capsule (1) ;
d. remplissage du corps de capsule (1) avec un substrat de boisson ; et
e. scellage du corps de capsule (1) avec le film d'étanchéité (2) et fixation simultanée de la bague d'étanchéité (3) sur le bord semblable à une bride (10) au moyen du dispositif de scellage (4).

2. Procédé selon la revendication 1, **caractérisé en ce que** la bague d'étanchéité est constituée d'un élastomère, d'un thermoplaste ou d'un élastomère thermoplastique (TPE), de préférence de polyuréthane thermoplastique (TPU) .

3. Procédé selon l'une des revendications précédentes, **caractérisé en ce que** la bague d'étanchéité (3) est estampée ou découpée dans un film.

4. Procédé selon l'une des revendications précédentes, **caractérisé en ce que** la bague d'étanchéité (3) présente un diamètre intérieur, lequel est plus petit qu'un diamètre extérieur d'une paroi de capsule dans la région du bord semblable à une bride, de sorte que la bague d'étanchéité fixée après l'étape de scellage s'applique partiellement sur la paroi de capsule.

5. Procédé selon l'une des revendications précédentes, **caractérisé en ce que** le corps de capsule (1) est fabriqué en aluminium.

6. Procédé selon l'une des revendications précédentes, **caractérisé en ce que** la bague d'étanchéité (3) est déformée plastiquement pendant l'étape de scellage.

7. Procédé selon la revendication 6, **caractérisé en ce qu'**un côté frontal du support de capsule (40) présente un profilage, lequel est transmis à la bague d'étanchéité (3) pendant l'étape de scellage.

8. Procédé selon l'une des revendications précédentes, **caractérisé en ce que** le support de capsule (40) pour le corps de capsule (1) est conçu de telle façon qu'une fente (50) est présente dans la région du bord semblable à une bride (10) du corps de capsule (1), entre une paroi de capsule conique (11) du corps de capsule (1) et une paroi intérieure du support de capsule (40), de sorte qu'une partie du matériau de la bague d'étanchéité (3) peut s'écouler le long de la paroi de capsule (11) pendant le scellage du corps de capsule.
